# EUROPÄISCHE PATENTSCHRIFT

(11) **EP 3 181 396 B1**
(45) Veröffentlichungstag und Bekanntmachung des Hinweises auf die Patenterteilung: **17.04.2019**
(21) Anmeldenummer: 16200147.3
(22) Anmeldetag: 23.11.2016
(51) Int. Cl.: B60N 2/52, F16F 15/023, F16F 15/027, B60N 2/50, B60N 2/39, B62D 33/06, B60N 2/02

(54) **FAHRZEUGSCHWINGUNGSVORRICHTUNG**
VEHICLE VIBRATION DEVICE
DISPOSITIF DE VIBRATION DE VÉHICULE

(30) Priorität: 14.12.2015 DE 102015121764
(43) Veröffentlichungstag der Anmeldung: 21.06.2017
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- WO-A1-2007/058572
- WO-A1-2009/054788
- US-A- 3 882 956

## Beschreibung

Die Erfindung betrifft einen Fahrzeugsitz oder eine Fahrzeugkabine mit einer Fahrzeugschwingungsvorrichtung mit einem Unterteil und einem gegenüber dem Unterteil mittels einer Dämpfereinrichtung federnd gelagertem Oberteil, wobei das Oberteil an dem Unterteil mittels mindestens einer Schwenklagerung hängend gelagert ist, wobei die mindesten eine erste Schwenklagerung mindesten einen ersten Hebel umfass, dessen erstes Ende mittels einer ersten Schwenkachse am Unterteil und dessen zweites Ende mittels einer zweiten Schwenkachse am Oberteil angebracht ist, wobei das zweite Ende in einer Höhenrichtung gesehen unterhalb des ersten Endes liegt.

Bei einem Betrieb eines Fahrzeuges kann aufgrund von äußeren Einflüssen das Fahrzeug verschiedene Bewegungen erfahren. Diese sind im Allgemeinen Translationen entlang der Fahrzeuglängsrichtung, Fahrzeugbreitenrichtung und Fahrzeughöhenrichtung sowie Drehungen um jeweils diese Richtungen, auch bekannt als Nicken, Rollen und Gieren, wobei das Gieren im Allgemeinen nicht berücksichtigt wird.

Aus dem Stand der Technik bekannte Fahrzeugschwingungsvorrichtungen, insbesondere für Fahrzeugsitze sind derart ausgebildet, dass sie eine schwingende und federnde Lagerung zwischen einem Oberteil und einem Unterteil, in diesem Fall zwischen einem Fahrzeugsitzteil und einem Unterteil eines Fahrzeugsitzunterbaus, darstellen. Beispielsweise kann ein Fahrzeugsitz mit einem Sitzteil gegenüber einem Unterteil, welches an einem Fahrzeugkabinenboden oder einer Karosserie des Fahrzeuges befestigt ist, mittels Scherenarme verbunden sein, wobei zwischen dem Oberteil und dem Unterteil zusätzlich Federungseinrichtungen und/oder Dämpfereinrichtungen angeordnet sind, um eine in vertikaler Richtung ausgerichtete Schwingung, die von außen in das System des Fahrzeugsitzes eingeleitet wird, federnd abzufangen.

Ebenso gibt es horizontale Schwingungsvorrichtungen, die dazu dienen, Schwingungen, die in horizontaler Richtung in das System des Fahrzeugsitzes eingeleitet werden, abzufedern bzw. abzudämpfen. Hierfür ist das Oberteil des Fahrzeugsitzes gegenüber dem Unterteil des Fahrzeugsitzes in horizontaler Richtung federnd gelagert und kann in horizontaler bzw. transversaler Richtung eingeleitete Schwingungen federnd abfangen.

Weiter ist eine Schwingungsvorrichtung für einen Fahrzeugsitz oder eine Fahrzeugkabine aus der DE 10 2010 034 857 bekannt. Die dort beschriebene Schwingungsvorrichtung umfasst ein Oberteil, welche gegenüber einem Unterteil schwingend gelagert ist und Hebel aufweist, die eine bestimmte Lage zwischen dem Oberteil und dem Unterteil einnehmen. Das Oberteil wird dabei gegenüber dem Unterteil um einen fiktiven Drehpunkt, welcher unterhalb des Oberteils angeordnet ist, geschwenkt.

Da sich der Drehpunkt hierbei nicht seine Position verändern kann, ist die Vorrichtung lediglich dazu geeignet, kurzzeitige Rotationen eines Fahrzeugs, insbesondere Nicken und Rollen, gut abzufedern, aber keine Translationen des Fahrzeugs. Weiter ist diese Anordnung nicht dazu geeignet, eine Hanglage des Fahrzeuges sinnvoll auszugleichen.

WO 2007/058572 A1 zeigt dabei einen Fahrzeugsitz, welcher dem Oberbegriff des vorliegenden Anspruches 1 entspricht. Es sind dieser Druckschrift verschiedene Aufhängungen entnehmbar.

Es ist demzufolge Aufgabe der vorliegenden Erfindung, einen Fahrzeugsitz oder eine Fahrzeugkabine mit einer Fahrzeugschwingungsvorrichtung bereitzustellen, mittels welcher kurzzeitig auftretende Rotationen des Fahrzeugs, Translationen des Fahrzeugs und Hanglagenfahrten des Fahrzeuges ausgleichbar sind.

Diese Aufgabe wird gemäß den Merkmalen des Patentanspruches 1 bzw. des Patentanspruches 11 gelöst. Vorteilhafte Ausgestaltungen der Erfindung finden sich in den abhängigen Patentansprüchen.

Kerngedanke der Erfindung ist es, einen Fahrzeugsitz oder eine Fahrzeugkabine mit einer Fahrzeugschwingungsvorrichtung mit einem Unterteil und einem gegenüber dem Unterteil mittels einer Dämpfereinrichtung federnd gelagertem Oberteil, wobei das Oberteil an dem Unterteil mittels mindestens einer Schwenklagerung hängend gelagert ist, wobei die mindestens eine erste Schwenklagerung mindestens einen ersten Hebel umfasst, dessen erstes Ende mittels einer ersten Schwenkachse am Unterteil und dessen zweites Ende mittels einer zweiten Schwenkachse am Oberteil angebracht ist, wobei das zweite Ende in einer Höhenrichtung gesehen unterhalb des ersten Endes liegt, wobei mittels einer Verstelleinrichtung zumindest die Lage des ersten Endes des Hebels veränderbar ist.

Mittels der hängenden Lagerung des Oberteils gegenüber dem Unterteil mittels mindestens eines ersten Hebels wird eine Drehung um eine fiktive oder reelle Achse, welche in Fahrzeugbreitenrichtung oder in Fahrzeuglängsrichtung verlaufend angeordnet ist, erreicht. Vorzugsweise handelt es sich bei der Achse um eine fiktive Achse.

Erfindungsgemäß kann daher durch Veränderung der Lage bzw. der Position des ersten Endes des ersten Hebels durch die Verstelleinrichtung die Lage der fiktiven oder reellen Achse verändert werden, vorzugsweise in Fahrzeughöhenrichtung. Durch die Veränderung der Achse kann also ein Drehfeld beschrieben werden, das die Gesamtheit aller Lagen der Achse beschreibt.

Beim Überfahren einer Bodenunebenheit wird beispielsweise das Vorderrad des Fahrzeugs nach oben oder nach unten ausgelenkt, woraus eine Drehbewegung um eine Aufstandsfläche eines Hinterreifens resultieren kann. Die Massenträgheit des Fahrers bewegt den Fahrzeugsitz und entsprechend den Fahrer selber jedoch translatorisch weiter. Durch die hängende Lagerung mittels der Schwenkeinrichtung wird ein rotatorischer Freiheitsgrad bereitgestellt, so dass dem Fahrer die Rotation des Fahrzeuges beim Überfahren einer Bodenunebenheit nicht aufgezwungen wird.

Gemäß einer besonders bevorzugten Ausführungsform umfasst dabei die erste Schwenklagerung mindestens einen zweiten Hebel, dessen erstes Ende mittels einer mittels einer ersten Schwenkachse am Unterteil und dessen zweites Ende mittels einer zweiten Schwenkachse am Oberteil angeordnet ist, wobei das zweite Ende in der Höhenrichtung gesehen unterhalb des ersten Endes liegt.

Besonders bevorzugt ist die erste Schwenklagerung achsensymmetrisch bezüglich einer Mittelachse des Unterteils ausgebildet, wodurch eine besonders vorteilhaft Verschwenkung des Oberteils gegenüber dem Unterteil möglich ist. Insbesondere ist der Versatz dabei in jede Richtung im Wesentlichen gleich, insbesondere in horizontaler Richtung.

Dies ist insbesondere dahingehend vorteilhaft, da aufgrund des Bauraumes und aus sicherheitstechnischen Gründen der Versatz in horizontaler Richtung auf etwa 50 mm Gesamthub beschränkt ist, was einen linksseitigen und rechtsseitigen bzw. vorderseitigen und rückseitigen Versatz von 25 mm entspricht.

Gemäß einer weiteren bevorzugten Ausführungsform umfasst die Fahrzeugschwingungsvorrichtung mindestens eine zweite Schwenklagerung. Dabei sind vorteilhaft das Unterteil und das Oberteil mittels der mindestens einen ersten und mindestens einen zweiten Schwenklagerung miteinander verbindbar.

Hierbei umfasst vorteilhaft die erste Schwenklagerung ebenso wie die zweite Schwenklagerung jeweils mindestens einen Hebel, dessen erstes Ende mittels einer ersten Schwenkachse am Unterteil und dessen zweites Ende mittels einer zweiten Schwenkachse am Oberteil schwenkbar angebracht ist, wobei das zweite Ende oberhalb des ersten Endes liegt. Dies bedeutet, dass das Oberteil nach unten oder schräg nach unten weisenden Hebelarmen hängend an dem Unterteil aufgehängt ist, welches sich beispielsweise seitlich links und rechtsseitig von dem Oberteil nach oben erstreckt oder seitlich im vorderen und hinteren Bereich des Oberteils sich nach oben erstreckt.

Dadurch, dass erfindungsgemäß das erste Ende des ersten Hebels in seiner Lage veränderbar ist, ist es also folglich auch möglich, die Lage der fiktiven oder reellen Achse zu verändern. Durch Änderung des ersten Endes des ersten Hebels wird die Lage des gesamten ersten Hebels im Raum verändert, das heißt die Art der Schwenklagerung ist hierdurch ebenso veränderbar. Prinzipiell sind dabei drei grundsätzlich verschiedene Stellungen des ersten Hebels möglich.

Die erste Stellung ist, dass der Hebel in der Fahrzeughöhenrichtung ausgerichtet ist. Die zweite Stellung ist, dass der Hebel ausgehend von seinem ersten Ende schräg nach unten und nach innen angeordnet ist. Die dritte Stellung ist, dass der Hebel ausgehend von seinem ersten Ende schräg nach unten und schräg nach außen angeordnet ist.

Mittels der Verstelleinrichtung ist es daher möglich, zwischen diesen drei Stellungen zu wechseln. Vorzugsweise handelt es sich hierbei um eine stufenlose Verstellung, so dass jede denkbare Position zwischen den verschiedenen Stellungen denkbar ist. Das erste Ende des ersten Hebels ist daher stetig und ohne Unterbrechung mittels der Verstelleinrichtung bewegbar. Dabei sind verschiedene Ausführungen für die Verstelleinrichtung denkbar. Gemäß einer bevorzugten ersten Ausführungsform kann mittels der Verstelleinrichtung mindestens ein erstes Hebelelement des Unterteils, das sich im Wesentlichen in der Höhenrichtung oder in einem Winkel zu der Höhenrichtung erstreckt, und um eine Drehachse geschwenkt werden. Hierbei ist vorzugsweise das erste Ende des ersten Hebels mit dem ersten Hebelelement mittels der ersten Schwenkachse verbindbar.

Dies bedeutet, dass durch eine Schwenkung des Hebelelements des Unterteils die Lage des ersten Endes des Hebels veränderbar ist.

Gemäß einer besonders bevorzugten Ausführungsform weist die Verstelleinrichtung mindestens ein an dem Unterteil angeordnetes Kurbelelement mit einem ersten und einem zweiten Ende auf, wobei zumindest an dem ersten Ende des Kurbelelements ein erstes Ende einer ersten Pleuelstange schwenkbar angeordnet ist und ein zweites Ende der ersten Pleuelstange schwenkbar an dem ersten Hebelelement anordenbar ist. Vorzugsweise ist das Kurbelelement um eine Drehachse drehbar gelagert.

Durch Betätigen des Kurbelelements und der daraus resultierenden Bewegung der Pleuelstange ist es also möglich, das erste Hebelelement um die Drehachse zu schwenken bzw. zu drehen.

Gemäß einer bevorzugteren Ausführungsform ist an dem zweiten Ende des Kurbelelements ein erstes Ende einer zweiten Pleuelstange anordenbar und die zweite Pleuelstange mittels eines zweiten Endes der Pleuelstange mit mindestens einem zweiten Hebelelement des Unterteils schwenkbar verbunden. Vorzugseise ist das zweite Hebelelement des Unterteils hierbei ebenfalls schwenkbar gelagert. Besonders vorteilhaft ist es, wenn die Verstelleinrichtung derart ausgebildet ist, dass durch Betätigen der Verstelleinrichtung eine symmetrische Verstellung des ersten und des zweiten Hebelelements erfolgt.

Eine andere Möglichkeit der Ausgestaltung der Verstelleinrichtung ist, dass die Verstelleinrichtung mindestens ein Stellglied umfasst. Dieses Stellglied ist vorzugsweise einerseits mit dem Unterteil verbindbar und andererseits mit dem ersten Hebel, wodurch der erste Hebel um die Drehachse schwenkbar ist. Dabei ist vorzugsweise ein erstes Ende des Stellglieds mit dem ersten Hebelelement und ein zweites Ende des Stellglieds mit dem zweiten Hebelelement verbindbar.

Das Stellglied kann hierbei mechanisch, pneumatisch oder hydraulisch ausgebildet sein. Vorzugsweise handelt es sich beim Stellglied um einen hydraulischen Hubzylinder.

Weiter ist es gemäß einer bevorzugten Ausführungsform denkbar, dass die Verstelleinrichtung manuell oder automatisch betätigbar ist.

Eine manuelle Betätigung der Verstelleinrichtung kann beispielsweise durch den Fahrer durchgeführt werden, der die Verstelleinrichtung dann beispielsweise per Hand betätigt und die Position des ersten Endes des ersten Hebels entsprechend der aktuellen Fahrsituation anpassen kann.

Alternativ oder kumulativ ist es denkbar, dass die Verstelleinrichtung automatisch, vorzugsweise mittels einer Betätigungseinrichtung, betätigt wird. So ist es hierbei denkbar, dass mittels von Sensoren, beispielsweise Beschleunigungssensoren und Lagesensoren, ermittelt werden kann, welche Fahrsituation momentan vorliegt. So kann zum Beispiel mittels eines Lagesensors erkannt werden, ob eine Hanglage des Fahrzeuges vorliegt oder nicht. Bei einem Lagesensor kann es sich insbesondere um einen Winkelsensor handeln, so dass vorteilhaft eine längere Hanglagenfahrt gut detektierbar ist. Über einen Beschleunigungssensor kann dabei ermittelt werden, ob eine Bodenunebenheit überfahren wird oder nicht.

Die von den Sensoren aufgenommenen Daten werden vorzugsweise von einer Recheneinheit analysiert und die Recheneinheit steuert entsprechend die Betätigungseinrichtung an, wobei dann mittels der Betätigungseinrichtung die Verstelleinrichtung betätigt wird.

Gemäß einer weiteren Ausführungsform ist es auch denkbar, dass sowohl eine manuelle als auch eine automatische Betätigung denkbar ist. So kann vom Fahrer eine bestimmte Fahrsituation eingestellt, insbesondere voreingestellt, werden, wenn abzusehen ist, welche Anforderungen benötigt werden. Als Beispiel denke man an einen Fahrer, der mit dem Fahrzeug in einem Weinberg fährt. Die bevorzugte Voreinstellung ist hierbei die Hanglageneinstellung. Dennoch ist es mittels der automatischen Betätigung dann möglich, auf unvorhergesehene Bodenunebenheit reagieren zu können. Nach Überfahren einer derartigen Bodenunebenheit kann mittels der Recheneinheit wieder der Hanglagenausgleich angesteuert werden.

Gemäß einer bevorzugten Ausführungsform kann es vorgesehen sein, dass eine Schwenkbewegung des schwenkbaren Oberteils mittels einer Dämpfereinrichtung mit einer der Schwenkbewegung entgegenwirkenden Dämpfungskraft beaufschlagbar ist, wobei die Dämpfereinrichtung mit dem ersten Hebel verbindbar ist. Alternativ kann die Dämpfereinrichtung zwischen dem Oberteil und dem Unterteil angeordnet sein.

Durch diese Anordnung ist es möglich, die Schwenkbewegung des Oberteils gegenüber dem Unterteil besonders gut zu reduzieren.

Gemäß einer weiteren bevorzugten Ausführungsform ist das Unterteil mit einem Fahrzeugkarosserieteil oder -rahmen und/oder mit einem Fahrzeugkabinenteil verbundenem Fahrzeugsitzunterteil.

Abhängig davon, welche Kinematik vorliegt, ergibt sich für die jeweilige Kinematik eine andere fiktive Achse, um welche das Unterteil gedreht wird. Für die Kinematik der rotativen Isolation befindet sich die Achse unterhalb des Unterteils, für die Kinematik des Hanglagenausgleiches befindet sich die Achse oberhalb des Unterteils. Die Kinematik für die translatorische Isolation ist ein Spezialfall, da sich die Achse hierbei im Unendlichen befindet. Sie kann daher oberhalb oder unterhalb des Unterteils angeordnet sein.

Die zugrunde liegende Situation für die rotative Isolation und den Hanglagenausgleich ist insofern die gleich, dass das Fahrzeug eine Rotation erfährt, einerseits durch ein Überfahren einer Bodenunebenheit oder andererseits durch das Überfahren einer Hanglage.

Es ist jedoch für einen Fahrer ein grundlegender Unterschied festzustellen. Bei der rotativen Isolation ist der Fahrer normalerweise in einer horizontalen Lage sitzend auf dem Fahrzeugsitz, so dass er kurzzeitige, auch teilweise starke Auslenkungen in Kauf nimmt. Bei dem Hanglagenausgleich ist das Nutzfahrzeug über einen längeren Zeitraum hinweg gegenüber der Horizontalen verkippt, so dass hierdurch der Fahrer keine große Auslenkung gegenüber seiner ursprünglichen Position wünscht.

Insbesondere ist es möglich, den Hanglagenausgleich derart einzustellen, dass sich die fiktive Achse im Bereich des Oberkörpers des Fahrers befindet, wohingegen bei der rotatischen Isolation die Achse immer fahrzeugseitig und unterhalb des Fahrers angeordnet ist. Durch den Wechsel zwischen Hanglagenausgleich und rotativer Isolation ändert sich daher das Bezugssystem von Fahrzeug und Fahrer. Hierdurch ist es möglich, die beste Kinematik für den Fahrer entsprechend seiner Fahrsituation einzustellen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: Nutzfahrzeug mit den verschiedenen Bewegungsmöglichkeiten;
- Fig. 2A: schematische Darstellung der translatorischen Isolation;
- Fig. 2B: schematische Darstellung der rotativen Isolation;
- Fig. 2C: schematische Darstellung des Hanglagenausgleichs;
- Fig. 3: schematische Darstellung des Verstellbereiches;
- Fig. 4A-4C: Kinematik der jeweiligen Isolation mit einem Ausführungsbeispiel der Verstelleinrichtung;
- Fig. 5A-5C: Kinematik Hanglagenausgleich bei verschiedenen Fahrstellungen;
- Fig. 6A-6C: Kinematik rotative Isolation bei verschiedenen Fahrstellungen;
- Fig. 7A-7C: Kinematik translatorische Isolation bei verschiedenen Fahrstellungen;
- Fig. 8: perspektivische Darstellung der Fahrzeugschwingungsvorrichtung;
- Fig. 9A-9C: Fahrzeugschwingungsvorrichtung gemäß Fig. 8 rotative Isolation;
- Fig. 10A-10C: Fahrzeugschwingungsvorrichtung gemäß Fig.8 translatorische Isolation;
- Fig. 11A-11C: Fahrzeugschwingungsvorrichtung gemäß Figur 8 Hanglagenausgleich.

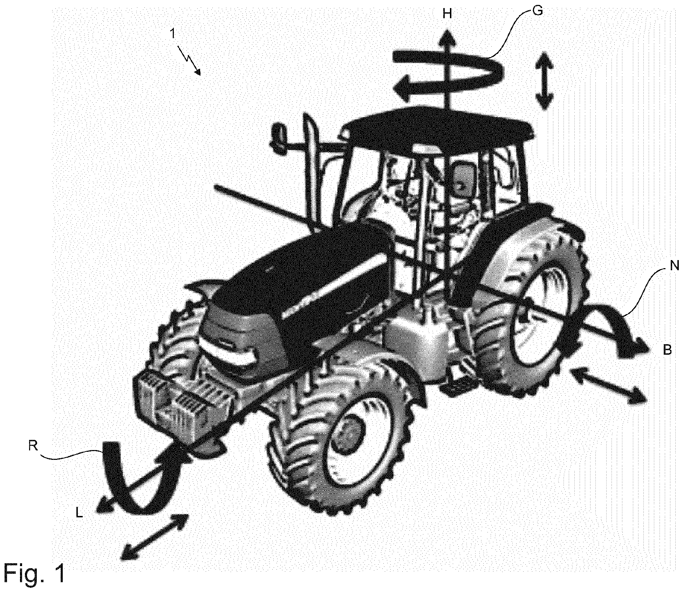

Das in der Figur 1 gezeigte Nutzfahrzeug 1 zeigt die typischen Bewegungen des Nutzfahrzeuges an, abhängig natürlich von der jeweiligen Fahrsituation. Es können hierbei Translationen des Nutzfahrzeugs entlang der Fahrzeuglängsrichtung L, der Fahrzeugbreitenrichtung B und der Fahrzeughöhenrichtung H auftreten. Weiter können jeweils um diese Achsen L, B, H Rotationen auftreten, wobei eine Rotation um die Längsrichtung L als Rollen R, eine Rotation um die Breitenrichtung B als Nicken N und eine Rotation um die Höhenrichtung H als Gieren G bekannt sind. Typischerweise wird Gieren für die Fahrzeuge vernachlässigt.

Erfindungsgemäß ist es möglich, diese Bewegungen, bis auf das vernachlässigbare Gieren, mittels der Fahrzeugschwingungsvorrichtung 2 auszugleichen.

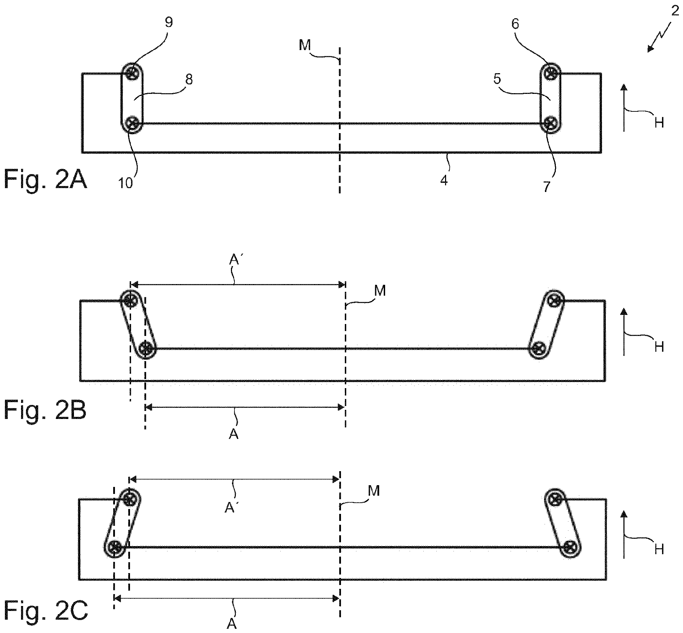

Die drei grundsätzlich verschiedenen Stellungen der Fahrzeugschwingungsvorrichtung 2 sind durch die Figuren 2A, 2B und 2C gezeigt. Die Figuren können hierbei verschiedene Maßstäbe aufweisen. Diese Stellungen werden eingenommen, wenn keine Schwingung des Oberteils 3 gegenüber dem Unterteil 4 durchgeführt wird, also keine äußere Störung oder dergleichen auftritt.

In der Figur 2A ist eine erste Stellung, insbesondere des ersten Endes 6 des ersten Hebels 5, gezeigt. Hierbei ist das erste Ende 6 des ersten Hebels 5 in Höhenrichtung H gesehen über dem zweiten Ende 7 des ersten Hebels 5 angeordnet. Zusätzlich ist ein zweiter Hebel 8 zu erkennen, wobei der zweite Hebel 8 mittels seines ersten Endes 9 mit dem Unterteil 4 und mittels seines zweiten Endes 10 mit dem Oberteil 3 verbunden ist. Vorliegend sind also der erste 5 und zweite Hebel 8 zueinander parallel zueinander ausgebildet und verlaufen in Höhenrichtung H. Die hier dargestellte schematische Fahrzeugschwingungsvorrichtung 2 ist achsensymmetrisch zu der Mittelachse M des Unterteils 4. Die ersten 6, 9 und zweiten Enden 7, 10 bilden ein Parallelogramm, bei einer Verschwenkung des Oberteils 3 gegenüber dem Unterteil 4 bleiben das Oberteil 3 und das Unterteil 4 parallel zueinander. Diese Stellung ist insbesondere zur Isolation von Translationen bevorzugt und im Folgenden mit translatorische Isolation 13 bezeichnet.

Die Figur 2B zeigt dabei ähnlich zu der Figur 2A einen ersten 5 und zweiten Hebel 8, wobei der Abstand A der jeweiligen zweiten Enden 7, 10 von der Mittelachse M geringer ist als der Abstand A'. Die zweiten Enden 7, 10 sind also weiter nach innen gerückt. Bei einer Verschwenkung des Oberteils 3 gegenüber dem Unterteil 4 ist das Oberteil 3 nicht mehr parallel zu dem Unterteil 4. Diese Aufhängung beschreibt insbesondere eine Drehung des Oberteils 3 um eine unterhalb des Oberteils 3 angeordneten fiktiven Achse 11. Diese Stellung ist insbesondere zur Isolation von Roll- und Nickbewegungen bevorzugt und im Folgenden mit rotatorischer Isolation 14 bezeichnet.

Die Figur 2C zeigt die gleichen Bauteile wie die Figuren 2A und 2B, jedoch ist der Abstand A der ersten Enden 7, 10 von der Mittelachse M größer als der Abstand A' der zweiten Enden zu der Mittelachse M. Die zweiten Enden 7, 10 sind also weiter nach außen gerückt. Bei einer Verschwenkung des Oberteils 3 gegenüber dem Unterteil 4 ist das Oberteil 3 nicht mehr parallel zu dem Unterteil 4. Diese Aufhängung beschreibt insbesondere eine Drehung des Oberteils 3 um eine oberhalb des Oberteils 3 angeordneten fiktiven Achse 11. Diese Stellung ist insbesondere zur Isolation von Hanglagen und Roll- und Nickbewegungen bevorzugt und im Folgenden mit Hanglagenausgleich 15 bezeichnet.

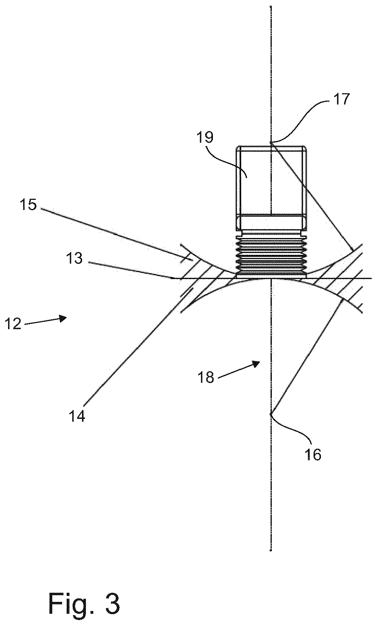

Ein möglicher Verstellbereich 12 und die Position der fiktiven Achse 11 sind besonders gut der Figur 3 zu entnehmen.

Dabei sind beispielhaft eine Drehachse 16 für die rotatorische Isolation und eine Drehachse 17 für den Hanglagenausgleich angegeben. Die Drehachse 16 ist dabei unterhalb des Oberteils 3 und insbesondere unterhalb des Unterteils 4 angeordnet und die Drehachse 17 oberhalb des Oberteils 3 bzw. oberhalb des Unterteils 4.

Wenn die Drehachse 16 sich unterhalb des Oberteils 3 befindet, so wird ein konvexer Fall beschrieben, wobei sich das System bestehend aus der Fahrzeugschwingungsvorrichtung 2 und vorliegend einem Fahrzeugsitz 19 oberhalb eines Kreisbogens. Die Bewegung des Systems entspricht im Wesentlichen dem Kreisbogenverlauf bzw. wird entsprechend der vorliegenden Kinematik angenähert.

Durch die Gerade 13 ist die translatorische Isolation 13 angegeben. Da sich das System bei einer translatorischen Isolation 13 entlang der Geraden 13 bewegt, ist keine Drehachse bzw. kein Drehpunkt vorhanden. Aufgrund von baulichen Toleranzen und Abweichungen kann aber von einer Drehachse ausgegangen werden, welche sich im Unendlichen befindet.

Befindet sich die Drehachse 17 oberhalb des Unterteils 4 und/oder oberhalb des Oberteils 3, handelt es sich um einen konkaven Fall, d.h. das System bewegt sich innerhalb des variablen Kreisbogens.

Durch die Achse 18 wird ein mögliches Drehfeld oder Drehachsenfeld aufgezeigt, d.h. die Drehachse kann jeden Wert des Drehfeldes 18 annehmen, abhängig von der aktuellen oder gewünschten Fahrsituation.

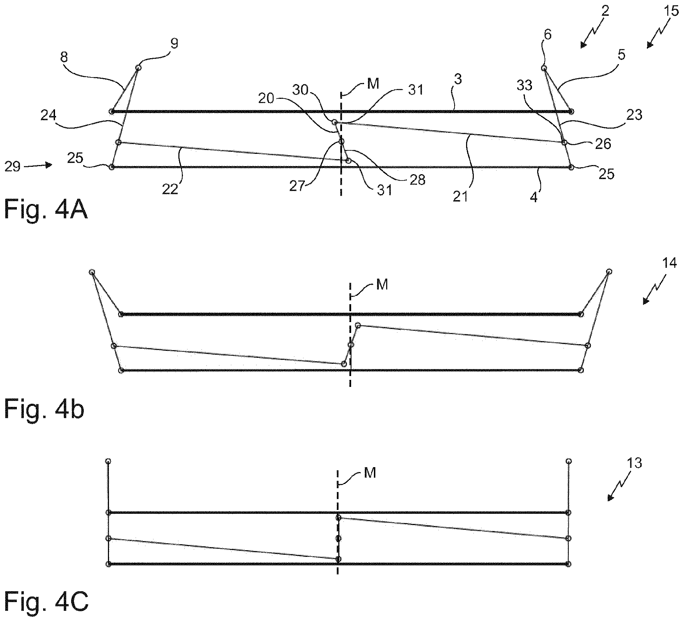

In den Figuren 4A-4C ist eine Fahrzeugschwingungsvorrichtung 2 mit einer ersten Ausführungsform, in schematischer Darstellung, einer Verstelleinrichtung 29 dargestellt, wobei die Figur 4A die Verstelleinrichtung 29 in der Stellung Hanglagenausgleich 15, die Figur 4B die Verstelleinrichtung 29 in der Stellung rotatorische Isolation 14 und die Figur 4C die Verstelleinrichtung in der Stellung translatorische Isolation 13 zeigt.

Die Verstelleinrichtung 29 umfasst vorliegend ein Kurbelelement 20, das mittels einer Kurbellagerun 27 drehbar mit einer Kurbelbefestigung 28 verbindbar ist, wobei die Kurbelbefestigung 28 vorzugsweise mit der Unterseite 4 verbindbar ist, vorteilhaft starr verbindbar ist. Weiter ist es vorteilhaft, wenn die Kurbelbefestigung 28 sich im Wesentlichen entlang der Mittelachse M der Unterseite 4 erstreckt. Natürlich sind auch andere Befestigungsmöglichkeiten denkbar, wobei die Anordnung entlang der Mittelachse M bevorzugt wird, da eine symmetrische Ausgestaltung der Verstelleinrichtung 29 möglich ist. Insbesondere können eine erste 21 und zweite Pleuelstange 22 gleich ausgebildet werden.

Das Kurbelelement 20 weist dabei ein erstes 30 und zweites Ende 31 auf, wobei an dem ersten Ende 30 des Kurbelelements 20 ein erstes Ende 32 der ersten Pleuelstange 21 schwenkbar angeordnet ist und ein zweites Ende 33 der ersten Pleuelstange 21 schwenkbar an einem ersten Hebelelement 23 angeordnet ist. Das erste Hebelelement 23 ist schwenkbar mittels einer Drehachse 25 mit dem Unterteil 4 verbindbar.

Weiter ist an dem zweiten Ende 31 des Kurbelelements 20 ein erstes Ende 32 der zweiten Pleuelstange 22 schwenkbar angeordnet und die zweite Pleuelstange 22 mit dem zweiten Hebelelement 24 des Unterteils 4 schwenkbar mittels einer Verbindung 26 angeordnet.
Durch diese Anordnung der Verstelleinrichtung 29 ist es daher möglich, bei Betätigen der Verstelleinrichtung 29, vorliegend durch eine Drehung des Kurbelelements 20 um die Kurbellagerung 27 in Uhrzeigersinn oder gegen den Uhrzeigersinn das erste 23 und zweite Hebelelement 24 um die Drehachse 25 zu verschwenken. Mittels dieser Verschwenkung der Hebelelemente 23, 24, die vorzugsweise symmetrisch ist, kann die Position der ersten Enden 6, 9 verändert werden, wie aus einem Vergleich der Figuren 4A-4C deutlich erkennbar ist.

Durch Veränderung der Lage der ersten Enden 6, 9 wird insgesamt die Lage der Hebel 5, 8 verändert, insbesondere ändert sich der Winkel, den der jeweilige Hebel 5, 8 mit der Mittelachse M einschließt.

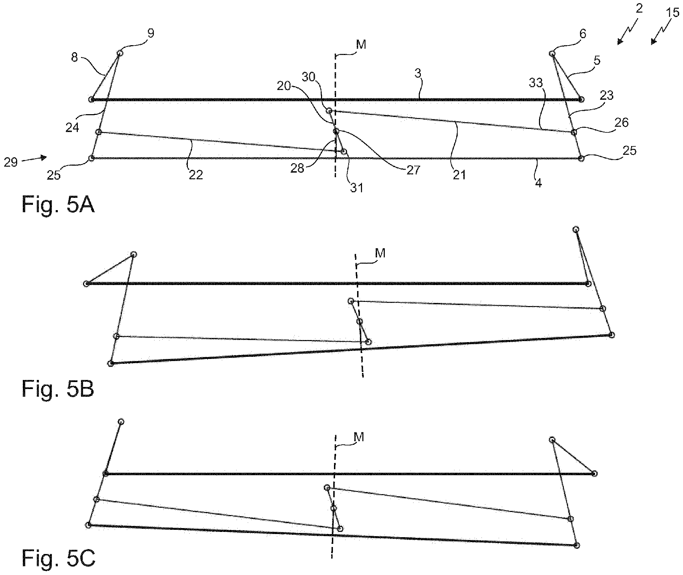

Die Figuren 5A-5C zeigen die Fahrzeugschwingungsvorrichtung 2 in der Stellung Hanglagenausgleich 15. Die Figur 5A zeigt dabei die Fahrzeugschwingungseinrichtung 2 in einer Stellung, in der das Nutzfahrzeug 1 (hier nicht dargestellt) noch keine Hanglage einnimmt. Die Unterseite 4, die vorzugsweise mit einem Fahrzeugkarosserieteil (hier nicht gezeigt) verbunden ist, repräsentiert demnach die Stellung bzw. die Lage des Nutzfahrzeuges 1.

Die Figur 5B zeigt eine Stellung, in der das Nutzfahrzeug 1 einen nach links abfallenden Hang befährt, wobei die Unterseite 4 entsprechend dieser Hanglage ausgerichtet ist. Durch diese Hanglage schwenken die Hebel 5, 8 entsprechend gegenüber der Unterseite 4. Die Oberseite 3 ist dabei nicht mehr parallel zur Unterseite 4.

Wie weiter zu erkennen ist, ändert sich die Position bzw. die Stellung der Verstelleinrichtung 29 nicht, relativ gesehen zu der Unterseite 4. Das heißt, dass die Hebelelemente 23, 24 nicht verschwenkt werden.

Die Figur 5C zeigt die Situation beim Befahren eines nach rechts abfallenden Hanges.

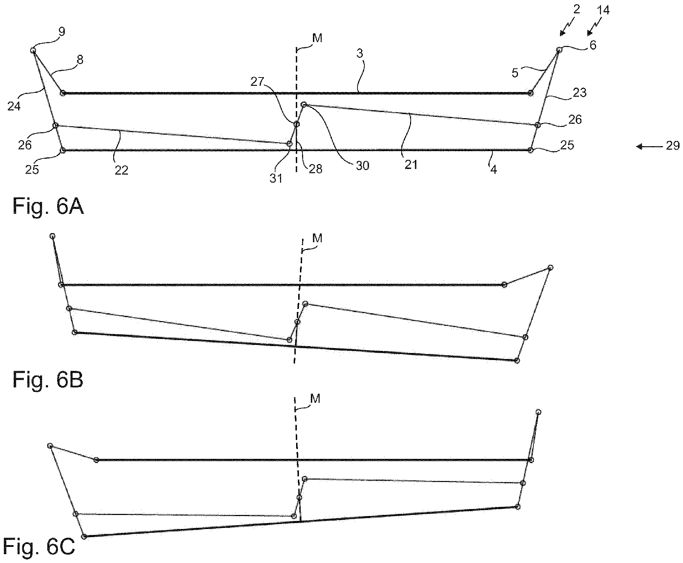

Die Figuren 6A-6C zeigen die Fahrzeugschwingungsvorrichtung 2 in der Stellung rotatorische Isolation 14, wobei die Figur 6A die Fahrzeugschwingungsvorrichtung 2 ohne äußeren Einfluss zeigt, die Figur 6B ein Überfahren einer Erhöhung auf der linken Fahrzeugseite und/oder ein Durchfahren einer Mulde auf der rechten Fahrzeugseite und die Figur 6C ein Überfahren einer Erhöhung auf der rechten Fahrzeugseite und/oder ein Durchfahren einer Mulde auf der linken Fahrzeugseite.

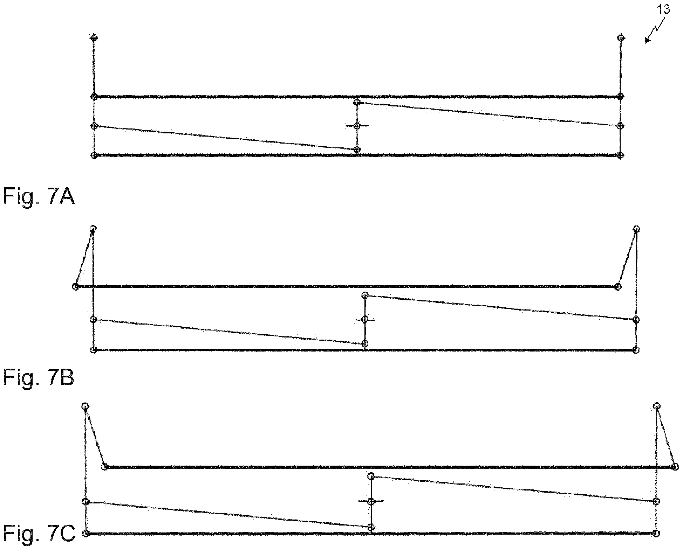

Die Figuren 7A-7C zeigen die Fahrzeugschwingungsvorrichtung 2 in der Stellung translatorische Isolation 13, wobei die Figur 7A die Fahrzeugschwingungsvorrichtung 2 ohne äußeren Einfluss zeigt. Die Figur 7B zeigt eine Translation des Nutzfahrzeuges 1 und entsprechend der Unterseite 4 nach rechts, die Figur 7C eine Translation links.

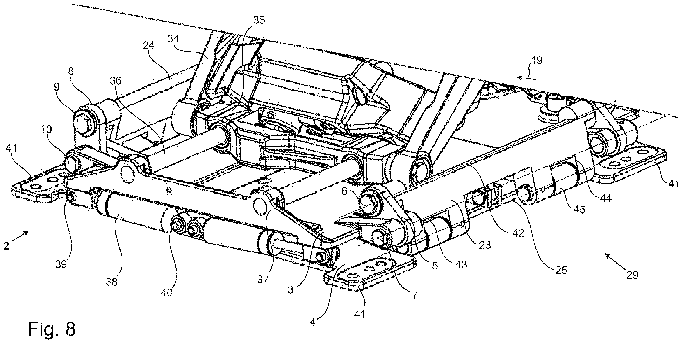

Die Figur 8 zeigt eine detailliertere Ausführungsform der Fahrzeugschwingungsvorrichtung 2. Zu erkennen ist das Unterteil 4, das mittels mindestens einer Befestigungsvorrichtung 41 auf einem Karosserieboden (hier nicht gezeigt) befestigbar ist. Alternativ ist es denkbar, dass das Unterteil 4 als ein Teil des Karosseriebodens ausgestaltet ist. Weiter ist der Figur 8 zu entnehmen, dass aus dem Oberteil 3 ein Fahrzeugsitz 19 angeordnet ist, der hierbei ausschnittsweise abgebildet ist. Zu erkennen ist ein Scherengestell 34, wobei ein erstes Ende 35 des Scherengestells 34 mit einer Gleitlagerung 36 verbunden ist. Ebenso ist die Gleitlagerung 36 mittels einer Befestigung 37 mit dem Oberteil 3 verbunden.

Weiter zu erkennen ist das Oberteil 3, das schwingend gegenüber dem Unterteil 4 gelagert ist. Das Oberteil 3 ist dabei mittels eines ersten Hebels 5 und eines zweiten Hebels 8 mit dem Unterteil 4 verbunden, wobei jeweils das zweite Ende 7, 10 der Hebel 5, 8 mittels einer zweiten Schwenkachse 43 mit dem Oberteil 3 und jeweils das erste Ende 6, 9 der Hebel 5, 8 mittels einer ersten Schwenkachse 42 mit dem Unterteil 4 verbindbar ist. Vorzugsweise umfasst hierbei das Unterteil 4 ein erstes 23 und zweites Hebelelement 24, die jeweils mittels einer Drehachse 25 mit dem Unterteil 4 verbindbar sind und um diese Drehachse 25 schwenkbar sind.

Das erste 23 und das zweite Hebelelement 24 sind vorteilhafterweise gleich, also identisch, aufgebaut. Vorliegend sind die Hebelelemente 23, 24 U-förmig ausgestaltet, wobei die Enden des U jeweils eine Ausnehmung 44 aufweisen, in die ein entsprechendes Gegenstück 45 des Unterteils 4 eingreifen kann. Natürlich sind auch noch andere Ausgestaltungen der Hebelelemente 23, 24 denkbar.

Um eine entsprechende Dämpfung zu erhalten, sind vorliegend zwischen dem Oberteil 3 und dem Unterteil 4 Dämpfer 38 angeordnet, wobei die Dämpfer mittels eines ersten Endes 39 mit dem Oberteil 3 und mittels eines zweiten Endes 40 mit dem Unterteil 4 verbindbar sind.

Durch eine Verschwenkung der Hebelelemente 23, 24 ist es möglich, die Lage bzw. Position des ersten Endes 6 des Hebels 5 zu verändern. So sind verschiedene Möglichkeiten denkbar, um die Hebelelemente 23, 24 um die Drehachse 25 zu verschwenken. So ist es hierbei insbesondere denkbar, dass die Hebelelemente 23, 24 mittels eines elektrischen Stellgliedes, beispielsweise einem Motor (hier nicht gezeigt), verschwenkbar sind. Natürlich sind auch die zuvor beschriebenen Ausführungen mittels einer Kurbelvorrichtung oder einem pneumatischen bzw. hydraulischen Stellglied denkbar.

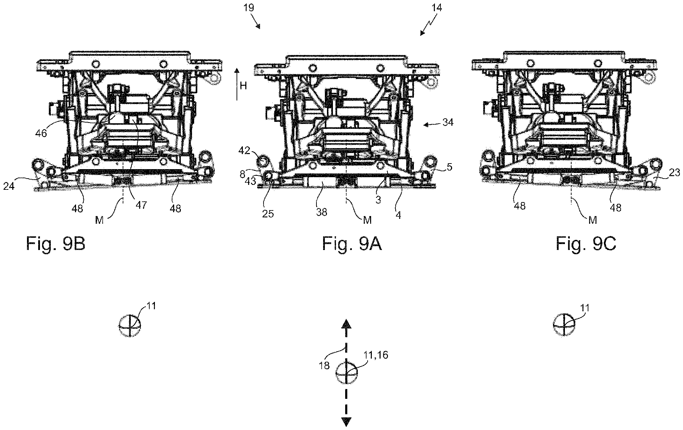

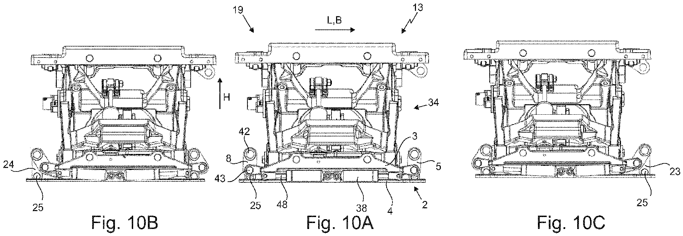

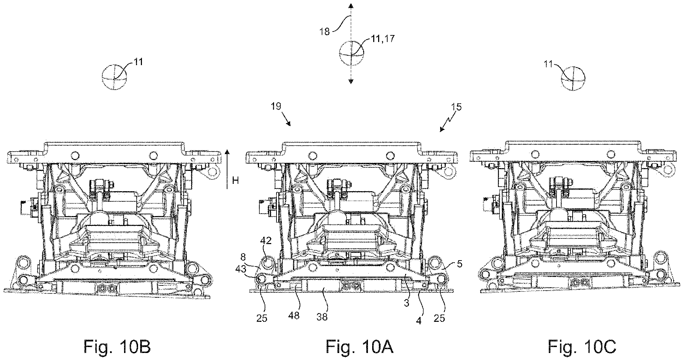

Die Figuren 9A-9C zeigen dabei die Fahrzeugschwingungseinrichtung 2 gemäß Figur 8 in der Stellung der rotatorischen Isolation 14, die Figuren 10A-10C die Schwingungseinrichtung 2 in der Stellung der translatorischen Isolation 13 und die Figuren 11A-11B die Schwingungseinrichtung 2 in der Stellung des Hanglagenausgleichs.

Die Figur 9A zeigt die Situation ohne eine äußere Krafteinwirkung auf das Nutzfahrzeug und entsprechend auf die Schwingungsvorrichtung 2, die Figur 9B bei Überfahren einer Erhöhung auf der rechten Seite und/oder ein Überfahren einer Erniedrigung auf der linken Seite und die Figur 9C bei Überfahren einer Erhöhung auf der linken Seite und/oder ein Überfahren einer Erniedrigung auf der rechten Seite. Weiter ist die entsprechende fiktive Achse, um die die Fahrzeugschwingungsvorrichtung 2 und insbesondere die Unterseite 4 verschwenkt wird. Es sei hierbei angemerkt, dass sich aufgrund der zugrunde liegenden Kinematik die fiktive Achse 11 in einem gewissen Maße entlang der Höhenrichtung H verschieben kann. Die Verschiebung der Achse 11 ist gleichbedeutend mit einer Bewegung der Achse in dem Drehfeld 18 (hier lediglich ausschnittsweise dargestellt). Die Verschwenkung um die Achse 11 entspricht aber dennoch im Wesentlichen bzw. angenähert einer Bewegung auf der entsprechenden Kreisbahn der fiktiven Achse 11. Die Achse 11 befindet sich hierbei in Höhenrichtung H gesehen unterhalb der Unterseite 4.

Weiter ist den Figuren deutlich zu entnehmen, wie die Schwingung des Oberteils 3 gegenüber dem Unterteil 4 mittels der Dämpfer 38 gedämpft wird. Je nach Rotationsrichtung wird eine Kolbenstange 48 des einen Dämpfers 38 weiter herausgezogen, die Kolbenstange 48 des anderen Dämpfers 38 weiter hineingeschoben.

Darüber hinaus ist aus einem Vergleich der Figuren 9A-9C zu sehen, dass sich die Stellung der Hebelelemente 23, 24 gegenüber der Unterseite 4 nicht verändert. Weiter handelt es sich vorzugsweise um einen symmetrischen Aufbau der Schwingungsvorrichtung 2 bezüglich der Mittelachse der Unterseite 4.

Bei einer Verschwenkung des Unterteils 4 um die Achse 11, also entgegen dem Uhrzeigersinn, werden ebenso die Hebel 5, 8 entgegen dem Uhrzeigersinn um die erste Schwenkachse 42 verschwenkt. Die zweite Schwenkachse 43 ändert entsprechend der starren Verbindung mittels des Hebels 5, 8 ebenso die Position. Bei einer Verschwenkung des Unterteils 4 um die Achse 11 im Uhrzeigersinn verhält es sich genau anders herum, die Hebel 5, 8 werden im Uhrzeigersinn verschwenkt.

Wie bereits angedeutet, ist ein Fahrzeugsitz 19 mittels eines Scherengestells 34 mit der Oberseite 3 angeordnet. Dabei umfasst das Scherengestell weiter eine Dämpfereinrichtung 46 und eine Federeinrichtung 47, so dass der Sitz 19 auch wie bisher gefedert und/oder gedämpft werden kann.

Die Figuren 10A-10C zeigen die Fahrzeugschwingungsvorrichtung 2 in der Stellung der translatorischen Isolation 13. Die Hebel 5, 8 sowie die Hebelelemente 23, 24 sind im Wesentlichen parallel zueinander ausgebildet und sind in Höhenrichtung verlaufend angeordnet. Die Oberseite 3 und die Unterseite 4 bleiben auch bei einer Verschwenkung parallel zueinander. In der Situation der translatorischen Isolation 13 ist keine Achse 11 gezeigt, da es sich hier um eine unendlich weit von der Schwingungsvorrichtung 2 entfernte Achse handelt. Es handelt sich also um eine Translation der Fahrzeugschwingungsvorrichtung 2 und entsprechend des Fahrzeugsitzes 19 entlang der Längsrichtung L oder auch der Breitenrichtung B.

Die Figuren 11A-11C zeigen die Situation des Hanglagenausgleichs 15. Die fiktive Achse 11 befindet sich hierbei in Höhenrichtung H gesehen oberhalb des Unterteils 4 und besonders vorteilhaft oberhalb des Oberteils 3. Ähnlich wie bereits zu den Figuren 9A-9C beschrieben, ist auch hier die Position der Achse 11 aufgrund der zugrunde liegenden Kinematik bei einer Schwingung nicht konstant, sondern die Achse 11 kann sich geringfügig in Höhenrichtung im Drehfeld 18 (hier lediglich ausschnittsweise gezeigt) bewegen.

### Bezugszeichenliste

- 1: Nutzfahrzeug
- 2: Fahrzeugschwingungsvorrichtung
- 3: Oberteil
- 4: Unterteil
- 5: erster Hebel
- 6: erstes Ende erster Hebel
- 7: zweites Ende erster Hebel
- 8: zweiter Hebel
- 9: erstes Ende zweiter Hebel
- 10: zweites Ende zweiter Hebel
- 11: Achse
- 12: Verstellbereich
- 13: translatorische Isolation
- 14: rotatorische Isolation
- 15: Hanglagenausgleich
- 16: Drehachse rotatorische Isolation
- 17: Drehachse Hanglagenausgleich
- 18: Drehfeld
- 19: Fahrzeugsitz
- 20: Kurbelelement
- 21: erste Pleuelstange
- 22: zweite Pleuelstange
- 23: erstes Hebelelement
- 24: zweites Hebelelement
- 25: Drehachse
- 26: schwenkbare Verbindung
- 27: Kurbellagerung
- 28: Kurbelbefestigung
- 29: Verstelleinrichtung
- 30: erstes Ende Kurbelelement
- 31: zweites Ende Kurbelelement
- 32: erstes Ende Pleuelstange
- 33: zweites Ende Pleuelstange
- 34: Scherengestell
- 35: erstes Ende Scherengestell
- 36: Gleitlagerung
- 37: Befestigung Gleitlagerung
- 38: Dämpfer
- 39: erstes Ende Dämpfer
- 40: zweites Ende Dämpfer
- 41: Befestigungsvorrichtung
- 42: erste Schwenkachse
- 43: zweite Schwenkachse
- 44: Ausnehmung
- 45: Gegenstück
- 46: Dämpfer Sitz
- 47: Federung Sitz
- 48: Kolbenstange
- B: Breitenrichtung
- L: Längsrichtung
- H: Höhenrichtung

## Patentansprüche

1. Fahrzeugsitz (19) mit einer Fahrzeugschwingungsvorrichtung (2) mit einem Unterteil (4) und einem gegenüber dem Unterteil (4) mittels einer Dämpfereinrichtung federnd gelagertem Oberteil (3), wobei das Oberteil (3) an dem Unterteil (4) mittels mindestens einer Schwenklagerung hängend gelagert ist, wobei die mindestens eine erste Schwenklagerung mindestens einen ersten Hebel (5) umfasst, dessen erstes Ende (6) mittels einer ersten Schwenkachse (42) am Unterteil (4) und dessen zweites Ende (7) mittels einer zweiten Schwenkachse (43) am Oberteil (3) angebracht ist, wobei das zweite Ende (7) in einer Höhenrichtung (H) gesehen unterhalb des ersten Endes (6) liegt,
**dadurch gekennzeichnet, dass**
mittels einer Verstelleinrichtung (29) zumindest die Lage des ersten Endes (6) des ersten Hebels (5) veränderbar ist.

2. Fahrzeugsitz mit einer Fahrzeugschwingungsvorrichtung (2) nach Anspruch 1,
**dadurch gekennzeichnet, dass**
die erste Schwenklagerung mindestens einen zweiten Hebel (8) umfasst, dessen erstes Ende (9) mittels einer ersten Schwenkachse am Unterteil (4) und dessen zweites Ende (10) mittels einer zweiten Schwenkachse am Oberteil (3) angeordnet ist, wobei das zweite Ende(10) in der Höhenrichtung (H) gesehen unterhalb des ersten Endes (9) liegt.

3. Fahrzeugsitz mit einer Fahrzeugschwingungsvorrichtung (2) nach Anspruch 1 oder 2,
**dadurch gekennzeichnet, dass**
die Fahrzeugschwingungsvorrichtung (2) mindestens eine zweite Schwenklagerung aufweist und das Unterteil (4) und das Oberteil (3) mittels der mindestens einen ersten und mindestens einen zweiten Schwenklagerung miteinander verbindbar sind.

4. Fahrzeugsitz mit einer Fahrzeugschwingungsvorrichtung (2) nach einem der vorhergehenden Ansprüche,
**dadurch gekennzeichnet, dass**
mittels der Verstelleinrichtung (29) mindestens ein erstes Hebelelement (23) des Unterteils (4), das sich im Wesentlichen in der Höhenrichtung (H) oder in einem Winkel zu der Höhenrichtung (H) erstreckt, um eine Drehachse (25) schwenkbar ist und wobei das erste Ende (6) des ersten Hebels (5) mit dem ersten Hebelelement (23) mittels der ersten Schwenkachse (42) verbindbar ist.

5. Fahrzeugsitz mit einer Fahrzeugschwingungseinrichtung (2) nach Anspruch 4,
**dadurch gekennzeichnet, dass**
die Verstelleinrichtung (29) mindestens ein an dem Unterteil (4) angeordnetes Kurbelelement (20) mit einem ersten (30) und einem zweiten Ende (31) aufweist, wobei zumindest an dem ersten Ende (30) des Kurbelelements (20) ein erste Ende (32) einer ersten Pleuelstange (21) schwenkbar anordenbar ist und ein zweites Ende (33) der ersten Pleuelstange (21) schwenkbar an dem ersten Hebelelement (23) anordenbar ist.

6. Fahrzeugsitz mit einer Fahrzeugschwingungsvorrichtung (2) nach Anspruch 5,
**dadurch gekennzeichnet, dass**
an dem zweiten Ende (31) des Kurbelelements (20) ein erstes Ende einer zweiten Pleuelstange (22) anordenbar ist und die zweite Pleuelstange (22) mittels eines zweiten Endes der zweiten Pleuelstange (22) mit mindestens einem zweiten Hebelelement (24) des Unterteils (4) schwenkbar verbindbar ist.

7. Fahrzeugsitz mit einer Fahrzeugschwingungsvorrichtung (2) nach Anspruch 4,
**dadurch gekennzeichnet, dass**
die Verstelleinrichtung (29) mindestens ein Stellglied umfasst, welches mit dem Unterteil (4) verbindbar ist und mittels welchem das erste Hebelelement (23) um die Drehachse (25) schwenkbar ist.

8. Fahrzeugsitz mit einer Fahrzeugschwingungsvorrichtung (2) nach einem der vorangegangenen Ansprüche,
**dadurch gekennzeichnet, dass**
die Verstelleinrichtung (29) manuell oder automatisch betätigbar ist.

9. Fahrzeugsitz mit einer Fahrzeugschwingungsvorrichtung (2) nach einem der vorangegangenen Ansprüche,
**dadurch gekennzeichnet, dass**
eine Schwenkbewegung des schwenkbaren Oberteils (3) mittels einer Dämpfereinrichtung mit einer der Schwenkbewegung entgegenwirkenden Dämpfungskraft beaufschlagbar ist, wobei die Dämpfereinrichtung mit dem ersten Hebel (5) verbindbar ist oder die Dämpfereinrichtung zwischen Oberteil (3) und Unterteil (4) angeordnet ist.

10. Fahrzeugsitz mit einer Fahrzeugschwingungsvorrichtung (2) nach einem der vorangegangenen Ansprüche,
**dadurch gekennzeichnet, dass**
das Unterteil (3) mit einem Fahrzeugkarrosserieteil oder -rahmen und/oder mit einem Fahrzeugkabinenteil verbundenes Fahrzeugsitzunterteil ist.

11. Fahrzeugkabine mit einer Fahrzeugschwingungsvorrichtung (2) mit einem Unterteil (4) und einem gegenüber dem Unterteil (4) mittels einer Dämpfereinrichtung federnd gelagertem Oberteil (3), wobei das Oberteil (3) an dem Unterteil (4) mittels mindestens einer Schwenklagerung hängend gelagert ist, wobei die mindestens eine erste Schwenklagerung mindestens einen ersten Hebel (5) umfasst, dessen erstes Ende (6) mittels einer ersten Schwenkachse (42) am Unterteil (4) und dessen zweites Ende (7) mittels einer zweiten Schwenkachse (43) am Oberteil (3) angebracht ist, wobei das zweite Ende (7) in einer Höhenrichtung (H) gesehen unterhalb des ersten Endes (6) liegt,
**dadurch gekennzeichnet, dass**
mittels einer Verstelleinrichtung (29) zumindest die Lage des ersten Endes (6) des ersten Hebels (5) veränderbar ist.

## Claims

1. Vehicle seat (19) comprising a vehicle vibration device (2) having a lower part (4) and an upper part (3) which is resiliently mounted with respect to the lower part (4) by means of a damping device, the upper part (3) being suspended on the lower part (4) by means of at least one pivot bearing, the at least one first pivot bearing comprising at least one first lever (5), the first end (6) of which is attached to the lower part (4) by means of a first pivot axis (42) and the second end (7) of which is attached to the upper part (3) by means of a second pivot axis (43), the second end (7) being positioned below the first end (6) when viewed in a vertical direction (H), **characterised in that**
it is possible to vary at least the position of the first end (6) of the first lever (5) by means of an adjustment device (29).

2. Vehicle seat comprising a vehicle vibration device (2) according to claim 1, **characterised in that**
the first pivot bearing comprises at least one second lever (8), the first end (9) of which is arranged on the lower part (4) by means of a first pivot axis and the second end (10) of which is arranged on the upper part (3) by means of a second pivot axis , the second end (10) being positioned below the first end (9) when viewed in the vertical direction (H).

3. Vehicle seat comprising a vehicle vibration device (2) according to either claim 1 or claim 2,
**characterised in that**
the vehicle vibration device (2) comprises at least one second pivot bearing and the lower part (4) and the upper part (3) can be interconnected by means of the at least one first and at least one second pivot bearing.

4. Vehicle seat having a vehicle vibration device (2) according to any of the preceding claims,
**characterised in that**
at least one first lever element (23) of the lower part (4), which extends substantially in the vertical direction (H) or at an angle to the vertical direction (H), can be pivoted about a rotary axis (25) by means of the adjustment device (29), and it being possible to connect the first end (6) of the first lever (5) to the first lever element (23) by means of the first pivot axis (42).

5. Vehicle seat comprising a vehicle vibration device (2) according to claim 4, **characterised in that**
the adjustment device (29) comprises at least one crank element (20) which is arranged on the lower part (4) and has a first (30) and a second end (31), it being possible for a first end (32) of a first connecting rod (21) to be pivotally arranged at least on the first end (30) of the crank element (20) and for a second end (33) of the first connecting rod (21) to be pivotally arranged on the first lever element (23).

6. Vehicle seat comprising a vehicle vibration device (2) according to claim 5, **characterised in that**
a first end of a second connecting rod (22) can be arranged on the second end (31) of the crank element (20) and the second connecting rod (22) can be pivotally connected to at least one second lever element (24) of the lower part (4) by means of a second end of the second connecting rod (22).

7. Vehicle seat comprising a vehicle vibration device (2) according to claim 4, **characterised in that**
the adjustment device (29) comprises at least one actuator which can be connected to the lower part (4) and by means of which the first lever element (23) can be pivoted about the rotary shaft (25).

8. Vehicle seat comprising a vehicle vibration device (2) according to any of the preceding claims,
**characterised in that**
the adjustment device (29) can be manually or automatically actuated.

9. Vehicle seat comprising a vehicle vibration device (2) according to any of the preceding claims,
**characterised in that**
a damping force countering the pivot movement can be applied to a pivot movement of the pivotable upper part (3) by means of a damping device, it being possible to connect the damping device to the first lever (5), or the damping device being arranged between the upper part (3) and the lower part (4).

10. Vehicle seat comprising a vehicle vibration device (2) according to any of the preceding claims,
**characterised in that**
the lower part (3) is a vehicle seat lower part connected to a vehicle body part or vehicle body frame and/or to a vehicle cab part.

11. Vehicle cab comprising a vehicle vibration device (2) having a lower part (4) and an upper part (3) which is resiliently mounted with respect to the lower part (4) by means of a damping device, the upper part (3) being suspended on the lower part (4) by means of at least one pivot bearing, the at least one first pivot bearing comprising at least one first lever (5), the first end (6) of which is attached to the lower part (4) by means of a first pivot axis (42) and the second end (7) of which is attached to the upper part (3) by means of a second pivot axis (43), the second end (7) being positioned below the first end (6) when viewed in a vertical direction (H), **characterised in that**
it is possible to vary at least the position of the first end (6) of the first lever (5) by means of an adjustment device (29).

## Revendications

1. Siège de véhicule (19) ayant un dispositif (2) de vibration de véhicule ayant une partie inférieure (4) et une partie supérieure (3) qui est montée de manière élastique par rapport à la partie inférieure (4) au moyen d'un dispositif amortisseur, la partie supérieure (3) étant montée de manière suspendue sur la partie inférieure (4) au moyen d'au moins un palier pivotant, ledit au moins un premier palier pivotant comportant au moins un premier levier (5) dont la première extrémité (6) est attachée à la partie inférieure (4) au moyen d'un premier axe de pivotement (42) et dont la seconde extrémité (7) est attachée à la partie supérieure (3) au moyen d'un second axe de pivotement (43), la seconde extrémité (7) se trouvant au-dessous de la première extrémité (6) lorsqu'elle est vue dans une direction de la hauteur (H), **caractérisé par le fait que**
au moins la position de la première extrémité (6) du premier levier (5) est modifiable au moyen d'un dispositif de réglage (29).

2. Siège de véhicule ayant un dispositif (2) de vibration de véhicule selon la revendication 1,
**caractérisé par le fait que**
le premier palier pivotant comporte au moins un second levier (8) dont la première extrémité (9) est disposée sur la partie inférieure (4) au moyen d'un premier axe de pivotement et dont la seconde extrémité (10) est disposée sur la partie supérieure (3) au moyen d'un second axe de pivotement, la seconde extrémité (10) se trouvant au-dessous de la première extrémité (9) lorsqu'elle est vue dans la direction de la hauteur (H).

3. Siège de véhicule ayant un dispositif (2) de vibration de véhicule selon l'une des revendications 1 ou 2,
**caractérisé par le fait que**
le dispositif (2) de vibration de véhicule présente au moins un second palier pivotant et la partie inférieure (4) et la partie supérieure (3) sont aptes à être reliées l'une à l'autre au moyen dudit au moins un premier palier pivotant et dudit au moins un second palier pivotant.

4. Siège de véhicule ayant un dispositif (2) de vibration de véhicule selon l'une des revendications précédentes,
**caractérisé par le fait que**
au moyen du dispositif de réglage (29), au moins un premier élément levier (23) de la partie inférieure (4), qui s'étend sensiblement dans la direction de la hauteur (H) ou selon un angle par rapport à la direction de la hauteur (H), est apte à pivoter autour d'un axe de rotation (25), et dans lequel la première extrémité (6) du premier levier (5) est apte à être reliée au premier élément levier (23) au moyen du premier axe de pivotement (42).

5. Siège de véhicule ayant un dispositif (2) de vibration de véhicule selon la revendication 4,
**caractérisé par le fait que**
le dispositif de réglage (29) présente au moins un élément manivelle (20) disposé sur la partie inférieure (4), ayant une première extrémité (30) et une seconde extrémité (31), une première extrémité (32) d'une première bielle (21) étant apte à être disposée pivotante au moins sur la première extrémité (30) de l'élément manivelle (20) et une seconde extrémité (33) de la première bielle (21) étant apte à être disposée pivotante sur le premier élément levier (23).

6. Siège de véhicule ayant un dispositif (2) de vibration de véhicule selon la revendication 5,
**caractérisé par le fait que**
une première extrémité d'une seconde bielle (22) est apte à être disposée sur la seconde extrémité (31) de l'élément manivelle (20) et la seconde bielle (22) est apte à être reliée de façon pivotante à au moins un second élément levier (24) de la partie inférieure (4) au moyen d'une seconde extrémité de la seconde bielle (22).

7. Siège de véhicule ayant un dispositif (2) de vibration de véhicule selon la revendication 4,
**caractérisé par le fait que**
le dispositif de réglage (29) comporte au moins un actionneur, lequel est apte à être relié à la partie inférieure (4) et au moyen duquel le premier élément levier (23) est apte à pivoter autour de l'axe de rotation (25).

8. Siège de véhicule ayant un dispositif (2) de vibration de véhicule selon l'une des revendications précédentes,
**caractérisé par le fait que**
le dispositif de réglage (29) est actionnable manuellement ou automatiquement.

9. Siège de véhicule ayant un dispositif (2) de vibration de véhicule selon l'une des revendications précédentes,
**caractérisé par le fait que**
un mouvement de pivotement de la partie supérieure pivotante (3) peut être soumis, au moyen d'un dispositif amortisseur, à une force d'amortissement agissant à l'encontre du mouvement de pivotement, le dispositif amortisseur étant apte à être relié au premier levier (5) ou le dispositif amortisseur étant disposé entre la partie supérieure (3) et la partie inférieure (4).

10. Siège de véhicule ayant un dispositif (2) de vibration de véhicule selon l'une des revendications précédentes,
**caractérisé par le fait que**
la partie inférieure (3) est une partie inférieure de siège de véhicule reliée à une partie carrosserie ou châssis de véhicule et/ou à une partie cabine de véhicule.

11. Cabine de véhicule ayant un dispositif (2) de vibration de véhicule ayant une partie inférieure (4) et une partie supérieure (3) montée de manière élastique par rapport à la partie inférieure (4) au moyen d'un dispositif amortisseur, la partie supérieure (3) étant montée d'une manière suspendue sur la partie inférieure (4) au moyen d'au moins un palier pivotant, ledit au moins un premier palier pivotant comportant au moins un premier levier (5) dont la première extrémité (6) est attachée à la partie inférieure (4) au moyen d'un premier axe de pivotement (42) et dont la seconde extrémité (7) est attachée à la partie supérieure (3) au moyen d'un second axe de pivotement (43), la seconde extrémité (7) se situant au-dessous de la première extrémité (6) lorsqu'elle est vue dans une direction de la hauteur (H),
**caractérisé par le fait que**
au moins la position de la première extrémité (6) du premier levier (5) est modifiable au moyen d'un dispositif de réglage (29).
